(19)

Europäisches
Patentamt
European
Patent Office
Office européen
des brevets

(11) **EP 4 272 865 A1**

(12) **EUROPEAN PATENT APPLICATION**
published in accordance with Art. 153(4) EPC

(43) Date of publication:
**08.11.2023 Bulletin 2023/45**

(21) Application number: **21915538.9**

(22) Date of filing: **29.11.2021**

(51) International Patent Classification (IPC):
*B01J 23/83* (2006.01)          *B01J 23/755* (2006.01)
*B01J 23/72* (2006.01)          *B01J 23/10* (2006.01)
*B01J 21/08* (2006.01)          *B01J 35/10* (2006.01)
*B01J 35/02* (2006.01)          *B01J 37/03* (2006.01)

(52) Cooperative Patent Classification (CPC):
**B01J 21/08; B01J 23/10; B01J 23/72;
B01J 23/755; B01J 23/83; B01J 35/02;
B01J 35/10; B01J 37/00; B01J 37/03; B01J 37/06;
B01J 37/08**

(86) International application number:
**PCT/KR2021/017696**

(87) International publication number:
**WO 2022/145740 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.12.2020   KR 20200188269**

(71) Applicant: **Hanwha Solutions Corporation
Jung-gu
Seoul 04541 (KR)**

(72) Inventors:
• **LEE, Yong Hee
  Daejeon 34128 (KR)**
• **PARK, Woo Jin
  Daejeon 34128 (KR)**
• **JEON, Bong Sik
  Daejeon 34128 (KR)**
• **JUNG, Eui Geun
  Daejeon 34128 (KR)**

(74) Representative: **Berggren Oy
P.O. Box 16
Eteläinen Rautatiekatu 10A
00101 Helsinki (FI)**

(54) **HYDROGENATION CATALYST WITH IMIPROVED SULFUR RESISTANCE AND METHOD FOR PRODUCING SAME**

(57)      The present invention relates to a hydrogenation catalyst with improved sulfur resistance and a method for producing the same. More specifically, the present invention comprises cerium and copper to enhance re- sistance to sulfur, that is, resistance to sulfur poisoning, thereby extending the lifespan and improving activity of the catalyst, which is be used in the hydrogenation of petroleum resin.

EP 4 272 865 A1

**Description**

[Technical Field]

The present invention relates to a hydrogenation catalyst with improved sulfur resistance and a method for producing the same. More particularly, the present invention relates to a hydrogenation catalyst that contains cerium and copper to improve lifespan and activity of the catalyst through improvement in resistance against sulfur, that is, sulfur poisoning resistance, and is applicable to hydrogenation of a petroleum resin.

[Background Art]

Naphtha cracking is an important process for producing basic intermediates, such as low-grade olefins (that is, ethylene, propylene, butylene, and butadiene) and aromatic compounds (that is, benzene, toluene, and xylene), which are used extensively in the petrochemical and chemical industries. Thermal cracking or steam pyrolysis is a main process for forming these materials, typically in the presence of steam and in the absence of oxygen. In addition to naphtha, feedstocks may include petroleum gases and distillates, such as kerosene and gas oils. Here, C4 oils including ethylene, propylene, butane and butadiene, cracked gasoline (including benzene, toluene and xylene), C5 oils including dicyclopentadiene (DCPD), C8 oils, cracked kerosene (C9 or more oils), cracked heavy oil (ethylene residue, bottom oil), and hydrogen gas can be produced by pyrolysis of naphtha and the like, and petroleum resins can be produced by polymerization from the oils and the like.
Specifically, "C5 oils" mean unsaturated hydrocarbons having 5 carbon atoms, such as cyclopentadiene, isoprene, piperylene, and the like, which are petroleum fractions, by-products, and combinations thereof obtained through pretreatment, distillation and polymerization of petroleum; "C8 oils" mean unsaturated hydrocarbons having 8 carbon atoms, such as styrene, octene, and the like, which are petroleum fractions, by-products, and combinations thereof obtained through pretreatment, distillation and polymerization of petroleum; and "C9 oils" mean unsaturated hydrocarbons having 9 carbon atoms, such as vinyl toluene, indene, and the like, which are petroleum fractions, by-products, and combinations thereof obtained through pretreatment, distillation and polymerization of petroleum. A polymerized petroleum resin partly contains double bonds of aromatic moieties (hereinafter referred to as "aromatic double bonds") and double bonds of aliphatic moieties (hereinafter referred to as "olefin double bonds"), and a high content of the olefin double bonds can deteriorate the quality of the petroleum resin, such as yellow color and foul odor. Here, when the petroleum resin is subjected to a hydrogenation process, in which hydrogen is added to the olefin double bonds, the quality of the petroleum resin can be improved to have a lighter color and reduced odor through saturation of the unsaturated double bonds. In general, such a hydrogenation process of the petroleum resin may be carried out by bringing hydrogen and a reactant performing hydrogenation into contact with a noble metal catalyst, such as palladium (Pd) and platinum (Pt), or with a nickel (Ni)-based transition metal catalyst.
Upon hydrogenation of petroleum resins, there is a problem of deactivation of a petroleum resin-hydrogenation catalyst due to sulfur poisoning by sulfur contained in the petroleum resins. A polymerization raw material of the petroleum resins contains various organosulfur components and the content of sulfur in the petroleum resins varies depending on components and composition of the polymerization raw material. For example, a petroleum resin prepared through polymerization of C5-based raw materials including dicyclopentadiene as main components may contain about 30 ppmw of sulfur, and a petroleum resin prepared through polymerization of C9-based raw materials including cracked kerosene may contain 300 ppmw or more of sulfur. As a result, catalysts having low sulfur resistance can quickly lose activity during hydrogenation, thereby causing low productivity of a hydrogenated petroleum resin.
Therefore, there is a need for a hydrogenation catalyst with improved sulfur resistance for application to hydrogenation of sulfur-containing petroleum resins.

[Related Literature]

[Patent Document]

(Patent Document 1) JP Unexamined Patent Publication No. 11-57482 (October 12, 2012)
(Patent Document 2) (Non-Patent Document 2) ACS Omega, 4 (2019) P4770.

[Disclosure]

[Technical Problem]

The present invention is aimed at solving the aforementioned problems.

It is one object of the present invention to provide a hydrogenation catalyst with improved sulfur resistance. That is, the present invention is aimed at improving lifespan and activity of a catalyst through improvement in sulfur poisoning resistance, that is, resistance against sulfur remaining in a petroleum resin upon hydrogenation of the petroleum resin.

It is another object of the present invention to provide a catalyst containing a high content of nickel and having a small crystal size, uniform particle size distribution and high dispersion to secure good activity in hydrogenation reaction.

[Technical Solution]

In order to achieve the above and other objects of the present invention while realizing advantageous effects of the invention, the present invention has the following features.

According to an embodiment of the present invention, there is provided a hydrogenation catalyst including: 40 to 80 parts by weight of nickel, 0.01 to 5 parts by weight of copper and 0.05 to 5 parts by weight of cerium as catalyst activation components; and 10 to 30 parts by weight of silica as a carrier.

According to an embodiment of the present invention, there is provided a method for producing a hydrogenation catalyst, including: preparing a first solution by dissolving a nickel precursor in a solvent so as to have a weight concentration (g/L) of nickel in the range of 25 to 100 in the first solution; preparing a second solution by adding a copper precursor and a cerium precursor to the first solution so as to have a weight concentration (g/L) of copper in the range of 0.01 to 5 and a weight concentration (g/L) of cerium in the range of 0.05 to 5 in the second solution; preparing a third solution by adding a silica carrier to the second solution and dispersing the silica carrier therein so as to have a weight concentration (g/L) of silica in the range of 5 to 30 in the third solution; placing the third solution in a precipitation bottle, followed by stirring and heating the third solution to a temperature of 50°C to 120°C; preparing a catalyst by adding a pH regulator to the third solution to precipitate and deposit the precursors on the silica carrier; washing and filtering the catalyst, followed by drying the filtered catalyst; and activating the dried catalyst through reduction of the dried catalyst.

According to an embodiment of the present invention, there is provided a petroleum resin hydrogenation method including: bringing a petroleum resin into contact with hydrogen in the presence of the hydrogenation catalyst.

According to an embodiment of the present invention, there is provided a petroleum resin hydrogenated by the petroleum resin hydrogenation method.

[Advantageous Effects]

According to the present invention, it is possible to improve lifespan and activity of a catalyst through improvement in sulfur poisoning resistance, that is, resistance against sulfur remaining in a petroleum resin upon hydrogenation of the petroleum resin.

According to the present invention, it is possible to provide a catalyst containing a high content of nickel and having a small crystal size, uniform particle size distribution and high dispersion to secure good activity in hydrogenation reaction.

[Best Mode]

Next, the present invention will be described in more detail with reference to some examples. It should be understood that these examples are provided for illustration only and are not to be construed in any way as limiting the invention.

Description of features not described herein and allowing sufficient technical inference by those skilled in the art will be omitted herein.

## Example 1

37.5 g of porous silica powder having a surface area of 300 $m^2/g$ and an average particle size of 7 $\mu$m and 1,875 mL of a solution, which was prepared by dissolving nickel nitrate (60 g/L nickel), copper nitrate (0.8 g/L copper), and cerium nitrate (1.5 g/L cerium) in distilled water, were placed in a precipitation bottle and heated to 80°C while stirring the solution. Thereafter, 1,500 mL of a sodium carbonate (175 g/L) solution was added to the bottle using a burette within 1 hour. After completion of precipitation, the prepared slurry had pH 8 and was washed with about 2 L of distilled water, followed by filtration and drying in a drying oven at 105°C for 8 hours or more. The resulting product was reduced and activated at 400°C under a hydrogen atmosphere. The activated catalyst was passivated using a nitrogen mixture gas containing 1 vol% of oxygen to prepare a hydrogenation catalyst. The detailed composition ratios of nickel, copper and cerium are shown in Table 1.

## Example 2

A hydrogenation catalyst was prepared in the same manner as in Example 1 except that the content of each of nickel, copper and cerium was changed. The detailed composition ratios of nickel, copper and cerium are shown in Table 1.

## Example 3

A hydrogenation catalyst was prepared in the same manner as in Example 1 except that the content of each of nickel, copper and cerium was changed. The detailed composition ratios of nickel, copper and cerium are shown in Table 1.

## Example 4

A hydrogenation catalyst was prepared in the same manner as in Example 1 except that porous silica powder having a surface area of 250 $m^2$/g and an average particle size of 20 $\mu$m was used. The detailed composition ratios of nickel, copper and cerium are shown in Table 1.

## Comparative Example 1

37.5 g of porous silica powder having a surface area of 300 $m^2$/g and an average particle size of 7 $\mu$m and 1,875 mL of a solution, which was prepared by dissolving nickel nitrate (60 g/L nickel) in distilled water, were placed in a precipitation bottle and heated to 80°C while stirring the solution. Thereafter, 1,500 mL of a sodium carbonate (175 g/L) solution was added to the bottle using a burette within 1 hour. After completion of precipitation, the prepared slurry had pH 8 and was washed with about 2 L of distilled water, followed by filtration and drying in a drying oven at 105°C for 8 hours or more. The resulting product was reduced and activated at 400 °C under a hydrogen atmosphere. The activated catalyst was passivated using a nitrogen mixture gas containing 1 vol% of oxygen to prepare a hydrogenation catalyst. The detailed composition ratios of nickel, copper and cerium are shown in Table 1.

## Comparative Example 2

A hydrogenation catalyst was prepared in the same manner as in Example 1 except that cerium nitrate (1.5 g/L cerium) was not used. The detailed composition ratios of nickel and copper are shown in Table 1.

## Comparative Example 3

A commercially available Pd/C catalyst (Aldrich) was used.

[Table 1]

| Kind | Composition ratio (wt%, XFR) | | | |
|---|---|---|---|---|
| | Nickel (Ni) | Copper (Cu) | Cerium (Ce) | Silica (SiO$_2$) |
| Example 1 | 67.2 | 1.0 | 1.7 | 16.9 |
| Example 2 | 67.7 | 1.0 | 0.4 | 17.2 |
| Example 3 | 67.3 | 1.0 | 3.5 | 16.5 |
| Example 4 | 67.0 | 1.0 | 1.8 | 17.0 |
| Comparative Example 1 | 71.0 | - | - | 17.8 |
| Comparative Example 2 | 68.3 | 1.2 | - | 17.3 |

(continued)

| Kind | Composition ratio (wt%, XFR) | | | |
|---|---|---|---|---|
| | Nickel (Ni) | Copper (Cu) | Cerium (Ce) | Silica (SiO$_2$) |
| Comparative Example 3 | Aldrich 5 wt% Pd/C | | | |
| * Nickel (Ni), copper (Cu), and cerium (Ce) may be present in the form of oxides thereof and the balance excluding the components in each of Examples and Comparative Examples includes oxygen (O). | | | | |

## Experimental Example 1: Measurement of catalyst property

For measurement of properties of the catalysts prepared in Examples and Comparative Examples and having the composition ratios as shown in Table 1, the crystal size of nickel, and the specific surface area, total pore volume, average pore size and average particle size of the catalyst were measured, and measurement results are shown in Table 2.

The crystal size of nickel was measured by X-Ray Diffraction (XRD) analysis according to the Scherrer equation and the specific surface of the catalyst was measured in accordance with the BET method. In addition, the total pore volume was measured through single point adsorption at P/P0=0.99 in a nitrogen adsorption assay and the average pore size was measured based on the Barrett-Joyner-Halenda (BJH) adsorption average size. The average particle size (d50) was measured by a laser diffraction method.

[Table 2]

| Kind | Nickel crystal size (nm) | BET specific surface area (m$^2$/g) | Total pore volume (cm$^3$/g) | Average pore size (nm) | Average particle size (d50, $\mu$m) |
|---|---|---|---|---|---|
| Example 1 | 4.4 | 205 | 0.30 | 6.1 | 6.9 |
| Example 2 | 4.8 | 202 | 0.30 | 5.9 | 6.7 |
| Example 3 | 4.5 | 206 | 0.31 | 6.0 | 7.1 |
| Example 4 | 4.7 | 200 | 0.30 | 6.0 | 19.5 |
| Comparative Example 1 | 4.7 | 200 | 0.29 | 5.8 | 7.3 |
| Comparative Example 2 | 4.5 | 210 | 0.29 | 6.3 | 7.2 |

## Experimental Example 2: Activity test of catalyst

To evaluate sulfur resistance of the catalyst, a hydrogenation test was conducted by adding 1 wt% of the catalyst (relative to the mass of a petroleum resin) to a CSTR reactor where reactants and products are fed and discharged. As a reactant to be hydrogenated, a petroleum resin (Hanwha Solution Co., Ltd.) comprising C9 oil-based raw materials containing 60 ppmw of sulfur was dissolved to a concentration of 30 wt% in a solvent (Exxsol D40). Reaction was performed at 250°C under a pressure of 85 bar in an H$_2$ atmosphere. After reaction for 1 hour, the hydrogenated petroleum resin solution was drained and recovered, and the unreacted petroleum resin solution was fed again for evaluation of lifespan of the catalyst. The used catalyst was reused without replacement. A hydrogenation conversion rate of the catalyst and an APHA value of the hydrogenated resin were measured according to the hydrogenation amount of the petroleum resin and are shown in Table 3.

The hydrogenation conversion rate was measured based on variation in olefin and aromatic contents in the petroleum resin measured by 1H-NMR before and after hydrogenation reaction as follows.

The petroleum resin before and after hydrogenation reaction was dissolved to a concentration of 2.5 wt% in CDCl$_3$, followed by 1H-NMR analysis (300 MHz). The hydrogenation conversion rate was calculated according to the following Equation 1.

[Equation 1]

Hydrogenation conversion rate (%)=(1- (the sum of the amounts of hydrogen in aromatic and olefin groups in petroleum resin after hydrogenation/the sum of the amounts of hydrogen in aromatic and olefin groups in petroleum resin before hydrogenation)) x 100

In Equation 1,

the amount of hydrogen contained in the aromatic groups in the petroleum resin was determined by the number of protons obtained from an area ratio of hydrogen peaks bound to aromatic hydrocarbons in the aromatic region, specifically in the region of 6.0 ppm to 9.0 ppm relative to the tetra-methyl silane (TMS) internal standard (0 ppm) in 1H-NMR analysis, and
the amount of hydrogen contained in the olefin group in the petroleum resin was measured by the number of protons obtained from an area ratio of hydrogen peaks in the olefin region, specifically in the region of 4.0 ppm to 6.0 ppm relative to the TMS internal standard reference (TMS, 0 ppm).

The APHA value was measured in accordance with the ASTM D1209 after hydrogenation.

[Table 3]

| Kind | Reaction result | | |
|---|---|---|---|
| | Hydrogenated amount of petroleum resin (g-resin/g-catal.) | Hydrogenation conversion rate (%) | Hydrogenation resin APHA |
| Example 1 | 50 | 90.2 | 8 |
| | 250 | 62.3 | 23 |
| Example 2 | 50 | 89.4 | 9 |
| | 250 | 60.1 | 22 |
| Example 3 | 50 | 87.7 | 12 |
| | 250 | 59.8 | 25 |
| Example 4 | 50 | 89.5 | 11 |
| | 250 | 60.3 | 22 |
| Comparative Example 1 | 50 | 85.3 | 14 |
| | 250 | 42.9 | 34 |
| Comparative Example 2 | 50 | 88.1 | 13 |
| | 250 | 45.3 | 33 |
| Comparative Example 3 | 50 | 50.3 | 27 |

From the results of Experimental Example 2 (Table 3), it can be seen that the hydrogenation catalyst obtained through addition of cerium and copper according to the present invention had an excellent conversion rate even in hydrogenation reaction of a petroleum resin containing 60 ppmw of sulfur. In addition, it could be seen that decrease in activity of the catalyst was small even if the hydrogenated amount of the petroleum resin was increased, and it could be seen that the catalysts according to the present invention had better sulfur resistance than those of Comparative Examples. In addition, it was confirmed that the hydrogenated resin had an APHA value of 30 or less, thereby providing a high-quality water-white petroleum resin.

[Mode for Invention]

Hereinafter, exemplary embodiments will be described more fully with reference to the accompanying drawings. These embodiments will be described in sufficient detail such that the present invention can be realized by those skilled in the art. It should be understood that various embodiments of the present invention are different from each other, but need not be mutually exclusive. For example, certain shapes, structures, and features described herein may be implemented in other embodiments without departing from the spirit and scope of the present invention with respect to one embodiment. In addition, it should be understood that locations or arrangement of individual components within each embodiment disclosed herein may be changed without departing from the spirit and scope of the present invention. Accordingly, the following detailed description is not intended to be limiting and the scope of the present invention is limited only by the appended claims and equivalents thereto. In the drawings, like reference numerals denote like components having the same or similar functions.

Hereinafter, exemplary embodiments of the present invention will now be described in detail with reference to the accompanying drawings to allow a person having ordinary knowledge in the art to easily implement the present invention.

A deposition-precipitation (DP) method means that precipitates produced through reaction of a metal precursor salt solution and a pH adjuster in a carrier dispersion are adsorbed to and solidified on a surface of the carrier in preparation of a catalyst. This method can provide catalyst uniformity, which is incomparable to metal catalysts prepared by co-precipitation or impregnation in conventional catalyst preparation methods. In addition, this method has an advantage of allowing easy selection and optimization of carriers having suitable particle size, size distribution, surface area, pore structure, and the like for reaction. Accordingly, the hydrogenation catalyst according to the present invention may be prepared by the DP method.

According to one embodiment of the invention, there is provided a hydrogenation catalyst including: 40 to 80 parts by weight of nickel, 0.01 to 5 parts by weight of copper and 0.05 to 5 parts by weight of cerium as catalyst activation components; and 10 to 30 parts by weight of silica as a carrier.

The hydrogenation catalyst may be prepared by mixing nickel or nickel oxide as a nickel source (precursor) in a solvent, and may provide a nickel nitrate precursor including metal salts, such as nitrate, acetate, sulfate, chloride, and the like, most preferably a nickel nitrate precursor including nitrate.

As a copper source (precursor), copper and copper oxide may be mixed in a solvent. In addition, the copper source may be provided in a bound state to metal salts, such as nitrate, acetate, sulfate, chloride, or combinations thereof.

As a cerium source (precursor), cerium and cerium oxide may be mixed in a solvent. In addition, the cerium source may be provided in a bound state to metal salts, such as nitrate, acetate, sulfate, chloride, or combinations thereof.

These sources (precursors) may be used in powder form to be mixed in a solvent, in which a solid carrier is suspended, whereby a nickel compound and a promoter can form a precipitate to be deposited on the solid carrier. The catalyst may be finally obtained through washing, filtering, drying, calcination, reduction, and the like.

In general, a nickel-containing catalyst has higher activity than other metal-containing catalysts in hydrogenation reaction. However, when a nickel precursor is supported on a carrier by the DP method, there is a problem of deterioration in activity of the catalyst due to increase in crystal size and deterioration in dispersion with increasing content of nickel, and when the content of nickel is decreased to prevent this problem, there is a problem of deterioration in activity despite relative improvement in dispersibility. As a result, it is difficult to prepare a nickel-carried catalyst through the DP method. To solve such problems, the present invention provides a catalyst, which has a small crystal size, uniform particle size distribution and high dispersion, through addition of copper, despite a high content of nickel.

Further, according to the present invention, the catalyst contains cerium to extend lifespan of the catalyst through improvement in sulfur poisoning resistance, that is, resistance against sulfur remaining in a petroleum resin upon hydrogenation of the petroleum resin.

According to the present invention, nickel having a crystal size of 3 nm to 8 nm may be used. The catalyst according to the present invention can maintain high dispersibility while controlling the crystal size of nickel in the range of 3 nm to 8 nm, as compared to catalysts prepared by typical manufacturing methods, such as co-precipitation and the like.

That is, as a result of hydrogenation of a sulfur-containing petroleum resin, the catalyst according to the present invention can improve lifespan and activity of the catalyst by improving sulfur poisoning resistance through addition of cerium and copper. This will be confirmed from results of examples.

According to one embodiment of the invention, the specific surface area, total pore volume, and average pore size of the catalyst may be measured through nitrogen adsorption assay. The specific surface area is measured by the BET (Brunauer, Emmett, Teller) method, in which the specific surface area of powder is measured by measuring the amount of nitrogen gas adsorbed to the surface of the catalyst. In addition, the total pore volume may be measured by single point adsorption at P/P0=0.99 in nitrogen adsorption assay. Further, the average pore size may be determined based on a Barrett-Joyner-Halenda (BJH) adsorption average size.

According to the present invention, the catalyst may have a specific surface area of 150 $m^2$/g to 300 $m^2$/g, a

total pore volume of 0.2 m³/g to 0.4 m³/g, and an average pore size of 5 nm to 10 nm. With this structure, the catalyst can provide an effect of improving activity of the catalyst while improving dispersion of nickel in hydrogenation reaction.

In addition, the catalyst may have an average particle size (d50) of 3 $\mu$m to 100 $\mu$m. As a result, the catalyst can have a uniform particle size distribution to provide good dispersibility and filterability.

Herein, the average particle size (d50) means a particle size at a point of 50% in a volume cumulative distribution of particles according to the particle diameter in particle size distribution analysis and may be measured by a laser diffraction method. Specifically, catalyst powder to be measured is dispersed in dispersant distilled water and introduced into a laser diffraction particle analyzer (Model: Mastersizer 2000, Malvern) to calculate the particle size distribution by measuring difference in diffraction patterns according to particle size while the particles pass through a laser beam.

The catalyst according to the present invention may be prepared in the form of powder, particle or granule, preferably in the form of powder.

Next, a method for producing the hydrogenation catalyst according to the present invention will be described. In this method, the same features as those of the hydrogenation catalyst may be applied and the repeated description will be omitted.

According to one embodiment of the invention, a method for producing a hydrogenation catalyst includes: preparing a first solution by dissolving a nickel precursor in a solvent so as to have a weight concentration (g/L) of nickel in the range of 25 to 100 in the first solution; preparing a second solution by adding a copper precursor and a cerium precursor to the first solution so as to have a weight concentration (g/L) of copper in the range of 0.01 to 5 and a weight concentration (g/L) of cerium in the range of 0.05 to 5 in the second solution; preparing a third solution by adding a silica carrier to the second solution and dispersing the silica carrier therein so as to have a weight concentration (g/L) of silica in the range of 5 to 30 in the third solution; placing the third solution in a precipitation bottle, followed by stirring and heating the third solution to a temperature of 50°C to 120°C; preparing a catalyst by adding a pH regulator to the third solution to precipitate and deposit the precursors on the silica carrier; washing and filtering the catalyst, followed by drying the filtered catalyst; and activating the dried catalyst through reduction of the dried catalyst.

Here, the precursors used in preparation of the first to third solutions may be provided as nickel, copper, or cerium per se, or in a bound state to metal salts thereof, such as oxides, nitrates, acetates, sulfates, chlorides, or combinations thereof.

In addition, precipitation of the catalyst precursor may be achieved by addition of a base or electrochemical means in an environment of pH 7 or more, preferably pH 7 to pH 9. Here, a basic compound may be added as a pH regulator and may include sodium carbonate, sodium hydroxide, sodium hydrogen carbonate, or a hydrate thereof, preferably sodium carbonate or a hydrate thereof, without being limited thereto.

In addition, upon drying the catalyst after washing and filtration of the catalyst, the catalyst may be dried at 100°C to 200°C for 5 to 24 hours.

In addition, in activation of the dried catalyst through reduction thereof, reduction is carried out at 200°C to 500°C in a hydrogen atmosphere.

Further, the method for producing the hydrogenation catalyst according to the present invention may further include passivating the activated catalyst. Passivation may be implemented by two methods. That is, passivation of the activated catalyst may be realized through gas passivation or through immersion of the activated catalyst in an organic solvent or in a solution containing a petroleum resin in an organic solvent.

For example, gas passivation may be performed in a nitrogen-mixed gas containing 0.1 vol% to 20 vol% of oxygen.

Passivation with an organic solvent may be performed using any organic solvent capable of blocking air, for example, Exxsol D40. In addition, a solution containing a petroleum resin in the organic solvent may also be used.

Next, a petroleum resin hydrogenation method including: bringing a petroleum resin into contact with hydrogen in the presence of the hydrogenation catalyst will be described.

According to the present invention, a reaction product of hydrogenation may be a petroleum resin. The petroleum resin polymerized from raw materials comprising C5, C8 and C9 petroleum fractions, by-products, and combinations thereof may be hydrogenated through distillation, pretreatment, and polymerization.

For example, a petroleum resin containing C5 oils or a petroleum resin containing C9 oils may be provided. In addition, the petroleum resin may be composed of by-products of DCPD oils or combinations thereof.

In addition, as the reaction product of hydrogenation, the petroleum resin may include an olefin group and an aromatic group. The petroleum resin is characterized by yellow color, foul odor, and easy oxidation in air due to unsaturated bonds (unsaturated bonds of the olefin group and the aromatic group) remaining in the petroleum resin after polymerization thereof. Accordingly, when hydrogenation is carried out using the hydrogenation catalyst according to the present invention under high temperature/pressure conditions to improve the quality of the petroleum resin, the unsaturated bonds are removed from the petroleum resin, thereby providing a transparent water-white petroleum resin, which is colorless, odorless, and has improved thermal stability.

Further, as the reaction product of hydrogenation, the petroleum resin may contain 1 ppmw to 300 ppmw of sulfur. For example, a petroleum resin prepared through polymerization of C5-based raw materials including dicyclopentadiene (DCPD) and the like may contain 30 ppmw or less of sulfur, and a petroleum resin prepared through polymerization of C9-based raw materials including cracked kerosene may contain 300 ppmw or less of sulfur. Upon hydrogenation of a petroleum resin using a hydrogenation catalyst having good sulfur poisoning resistance according to the present invention, it is possible to obtain a high quality hydrogenated petroleum resin having good activity and lifespan even under a high sulfur content condition.

Hydrogenation of the petroleum resin may be performed at a temperature of 100°C to 400°C, preferably 200°C to 300°C under a hydrogen pressure of 1 bar to 200 bar, preferably 50 bar to 100 bar. A period of time for hydrogenation may vary depending on the temperature, the amount of the catalyst, and the degree of hydrogenation. Furthermore, hydrogenation of the petroleum resin may be carried out in a variety of reactors, preferably within a continuously stirred reactor (CSTR) or loop reactor.

In addition, the petroleum resin according to the present invention may have an APHA value of 30 or less after completion of hydrogenation through contact with hydrogen.

An APHA color may also referred to as a Hazen scale or a cobalt (Pt/Co) scale and is measured by a color standard analysis method (ASTM D1209) that takes its name from the American Public Health Association. A color of the hydrogenated petroleum resin is analyzed based on the APHA value. When the petroleum resin has a color value of 30 or less, the petroleum resin becomes a water-white resin having substantially no color and odor, and has an olefin content (NMR % area) of less than 0.1 wt%, as measured by 1H-NMR.

Accordingly, upon hydrogenation of the petroleum resin using the hydrogenation catalyst having good sulfur poisoning resistance according to the present invention, it is possible to improve activity and lifespan of the catalyst through effective suppression of sulfur poisoning.

Although the present invention has been described with reference to some example embodiments and the accompanying drawings, it should be understood by those skilled in the art that these embodiments are given by way of illustration only, and that various modifications, variations and alterations can be made without departing from the spirit and scope of the invention.

Therefore, the embodiments should not be construed as limiting the technical spirit of the present invention, but should be construed as illustrating the technical spirit of the present invention. The scope of the invention should be interpreted according to the following appended claims as covering all modifications or variations derived from the appended claims and equivalents thereto.

[Industrial Applicability]

According to the present invention, it is possible to improve lifespan and activity of a catalyst through improvement in sulfur poisoning resistance, that is, resistance against sulfur remaining in a petroleum resin upon hydrogenation of the petroleum resin.

According to the present invention, it is possible to provide a catalyst containing a high content of nickel and having a small crystal size, uniform particle size distribution and high dispersion to secure good activity in hydrogenation reaction.

**Claims**

1.   A hydrogenation catalyst comprising: 40 to 80 parts by weight of nickel, 0.01 to 5 parts by weight of copper and 0.05 to 5 parts by weight of cerium as catalyst activation components; and 10 to 30 parts by weight of silica as a carrier.

2.   The hydrogenation catalyst as claimed in claim 1, wherein nickel, copper and cerium are present in the form of metals or oxide thereof.

3.   The hydrogenation catalyst as claimed in claim 1, wherein nickel has a particle size of 3 nm to 8 nm.

4.   The hydrogenation catalyst as claimed in claim 1, wherein the catalyst has a BET specific surface area of 150 $m^2$/g to 300 $m^2$/g.

5.   The hydrogenation catalyst as claimed in claim 1, wherein the catalyst has a total pore volume of 0.2 $m^3$/g to 0.4 $m^3$/g.

6.   The hydrogenation catalyst as claimed in claim 1, wherein the catalyst has an average pore size of 5 nm to 10 nm.

7.   The hydrogenation catalyst as claimed in claim 1, wherein the catalyst has an average particle size ($d_{50}$) of 3 $\mu$m

to 100 μm.

8. A method for producing a hydrogenation catalyst, comprising:

preparing a first solution by dissolving a nickel precursor in a solvent so as to have a weight concentration (g/L) of nickel in the range of 25 to 100 in the first solution;

preparing a second solution by adding a copper precursor and a cerium precursor to the first solution so as to have a weight concentration (g/L) of copper in the range of 0.01 to 5 and a weight concentration (g/L) of cerium in the range of 0.05 to 5 in the second solution;

preparing a third solution by adding a silica carrier to the second solution and dispersing the silica carrier therein so as to have a weight concentration (g/L) of silica in the range of 5 to 30 in the third solution;

placing the third solution in a precipitation bottle, followed by stirring and heating the third solution to a temperature of 50°C to 120°C;

preparing a catalyst by adding a pH regulator to the third solution to precipitate and deposit the precursors on the silica carrier;

washing and filtering the catalyst, followed by drying the filtered catalyst; and

activating the dried catalyst through reduction of the dried catalyst.

9. The method for producing a hydrogenation catalyst as claimed in claim 8, further comprising: passivating the activated catalyst.

10. The method for producing a hydrogenation catalyst as claimed in claim 9, wherein passivation of the activated catalyst is performed in a nitrogen mixed gas containing 0.1 vol% to 20 vol% of oxygen.

11. The method for producing a hydrogenation catalyst as claimed in claim 9, wherein passivation of the activated catalyst is performed through immersion of the activated catalyst in an organic solvent or in a solution containing a petroleum resin in an organic solvent.

12. A petroleum resin hydrogenation method comprising: bringing a petroleum resin into contact with hydrogen in the presence of the hydrogenation catalyst as claimed in claim 1.

13. The petroleum resin hydrogenation method as claimed in claim 12, wherein the petroleum resin is polymerized from a raw material comprising at least one selected from among C5, C8 and C9 petroleum fractions, by-products, and combinations thereof.

14. The petroleum resin hydrogenation method as claimed in claim 12, wherein the petroleum resin comprises a material selected from the group consisting of an olefin group, an aromatic group and combinations thereof.

15. The petroleum resin hydrogenation method as claimed in claim 12, wherein the petroleum resin has a sulfur content of 1 ppmw to 300 ppmw.

16. The petroleum resin hydrogenation method as claimed in claim 12, wherein the petroleum resin has an APHA value of 30 or less after hydrogenation of the petroleum resin.

17. A petroleum resin hydrogenated by the petroleum resin hydrogenation method as claimed in claim 12.

## INTERNATIONAL SEARCH REPORT

International application No.

**PCT/KR2021/017696**

### A. CLASSIFICATION OF SUBJECT MATTER

**B01J 23/83**(2006.01)i; **B01J 23/755**(2006.01)i; **B01J 23/72**(2006.01)i; **B01J 23/10**(2006.01)i; **B01J 21/08**(2006.01)i; **B01J 35/10**(2006.01)i; **B01J 35/02**(2006.01)i; **B01J 37/03**(2006.01)i

According to International Patent Classification (IPC) or to both national classification and IPC

### B. FIELDS SEARCHED

Minimum documentation searched (classification system followed by classification symbols)

B01J 23/83(2006.01); B01J 23/10(2006.01); B01J 23/63(2006.01); B01J 23/72(2006.01); B01J 23/755(2006.01); B01J 23/76(2006.01); B01J 23/89(2006.01); B01J 37/02(2006.01); C07C 29/17(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 촉매(catalyst), 니켈(nickel), 구리(copper), 세륨(cerium), 수소화(hydrogenation), 내황성(sulfur resistance)

### C. DOCUMENTS CONSIDERED TO BE RELEVANT

| Category* | Citation of document, with indication, where appropriate, of the relevant passages | Relevant to claim No. |
|---|---|---|
| Y | KR 10-2020-0082435 A (HANWHA SOLUTIONS CORPORATION) 08 July 2020 (2020-07-08) See paragraphs [0002], [0053] and [0055]; claims 1-10 and 12; experimental example 5; and table 5. | 1-17 |
| Y | KR 10-2010-0075498 A (PETROCHINA COMPANY LIMITED) 02 July 2010 (2010-07-02) See paragraphs [0014], [0015] and [0075]; claims 1 and 8; example 1; and tables 1 and 4. | 1-17 |
| A | JP 2010-279911 A (NIPPON SHOKUBAI CO., LTD.) 16 December 2010 (2010-12-16) See entire document. | 1-17 |
| A | KR 10-2005-0093530 A (HEESUNG ENGELHARD CORPORATION) 23 September 2005 (2005-09-23) See entire document. | 1-17 |
| A | JP 2020-518434 A (DSM IP ASSETS BV) 25 June 2020 (2020-06-25) See entire document. | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 March 2022** | **04 March 2022** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/017696**

| Patent document cited in search report | | | Publication date (day/month/year) | Patent family member(s) | | | Publication date (day/month/year) |
|---|---|---|---|---|---|---|---|
| KR | 10-2020-0082435 | A | 08 July 2020 | CN | 113164926 | A | 23 July 2021 |
| | | | | EP | 3903930 | A1 | 03 November 2021 |
| | | | | KR | 10-2300826 | B1 | 09 September 2021 |
| | | | | SG | 11202104689 | A | 29 July 2021 |
| | | | | TW | 202026062 | A | 16 July 2020 |
| | | | | WO | 2020-138684 | A1 | 02 July 2020 |
| KR | 10-2010-0075498 | A | 02 July 2010 | CN | 101423775 | A | 06 May 2009 |
| | | | | CN | 101423775 | B | 12 May 2010 |
| | | | | GB | 2467086 | A | 21 July 2010 |
| | | | | GB | 2467086 | B | 08 February 2012 |
| | | | | GB | 2467086 | B8 | 15 February 2012 |
| | | | | JP | 2011-502050 | A | 20 January 2011 |
| | | | | JP | 5357170 | B2 | 04 December 2013 |
| | | | | KR | 10-1469303 | B1 | 04 December 2014 |
| | | | | MY | 150048 | A | 29 November 2013 |
| | | | | US | 2010-0298129 | A1 | 25 November 2010 |
| | | | | US | 2014-0349844 | A1 | 27 November 2014 |
| | | | | US | 9597668 | B2 | 21 March 2017 |
| | | | | WO | 2009-062386 | A1 | 22 May 2009 |
| JP | 2010-279911 | A | 16 December 2010 | | None | | |
| KR | 10-2005-0093530 | A | 23 September 2005 | KR | 10-0569605 | B1 | 10 April 2006 |
| JP | 2020-518434 | A | 25 June 2020 | CN | 110582351 | A | 17 December 2019 |
| | | | | EP | 3618956 | A1 | 11 March 2020 |
| | | | | US | 1167270 | B2 | 09 November 2021 |
| | | | | US | 2020-0061587 | A1 | 27 February 2020 |
| | | | | WO | 2018-202639 | A1 | 08 November 2018 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11057482 A

**Non-patent literature cited in the description**

- *ACS Omega,* 2019, vol. 4, 4770